# EUROPÄISCHE PATENTSCHRIFT

(11) **EP 3 204 151 B1**
(45) Veröffentlichungstag und Bekanntmachung des Hinweises auf die Patenterteilung: **29.01.2020**
(21) Anmeldenummer: 15777667.5
(22) Anmeldetag: 06.10.2015
(51) Int. Cl.: B01J 4/00, C02F 1/72, C02F 3/34, C02F 11/06, B01F 3/08, B01F 15/00, C02F 101/10

(54) **OXIDATIONSBECKEN UND VERFAHREN ZUM BEHANDELN VON ABLAUFWASSER EINES MEERWASSER-ABGASWÄSCHERS**
OXIDATION BASIN AND METHOD FOR TREATING OUTLET WATER OF A SEAWATER-FLUE GAS SCRUBBER
BASSIN D'OXYDATION ET PROCÉDÉ DE TRAITEMENT DE L'EAU DE DÉCHARGE D'UN DISPOSITIF D'ÉPURATION D'EFFLUENTS GAZEUX À L'EAU DE MER

(30) Priorität: 09.10.2014 DE 102014015036
(43) Veröffentlichungstag der Anmeldung: 16.08.2017
(73) Patentinhaber: Steinmüller Babcock Environment GmbH, 51643 Gummersbach (DE)
(72) Erfinder: ZUM BROOK, Jörg, 51643 Gummersbach (DE); DREUSCHER, Helmut, 51643 Gummersbach (DE); PRIESMEIER, Ulrich, 51643 Gummersbach (DE)
(74) Vertreter: Carstens, Dirk Wilhelm
(86) Internationale Anmeldenummer: PCT/EP2015/073011
(87) Internationale Veröffentlichungsnummer: WO 2016/055450

(56) Entgegenhaltungen:
- EP-A1- 0 504 550
- WO-A1-2012/117003
- DE-A1- 2 844 046
- DE-A1- 3 217 803
- DE-A1-102010 028 571
- DE-A1-102010 028 573
- DE-C1- 19 815 207
- DE-U1- 8 708 201

## Beschreibung

Die Erfindung betrifft ein Oxidationsbecken zur Behandlung von Ablaufwasser aus einem Meerwasser-Abgaswäscher zum Entfernen von Schwefeldioxid aus dem Abgas, insbesondere aus einem Rauchgaswäscher eines Kraftwerks, in dem das Ablaufwasser zum Zwecke der Sulfatbildung und Neutralisation zusammen mit zusätzlichem Meerwasser vermischt wird, wobei das zusätzliche Meerwasser als Hauptstrom über eine Zuleitung und Ablaufwasser als Nebenstrom über eine weitere Zuleitung in das Oxidationsbecken geführt werden. Ein solches Oxidationsbecken ist aus der Broschüre "Seawater Flue Gas Desulphurisation (SWFGD)" bekannt, die über die Website der Firma Alstom unter der Adresse http://www.alstom.com/Global/Power/Resources/Documents/Brochures/seawater-flue-gas-desulphurisation.pdf erhältlich ist.

Generell sind Seewasser-Rauchgasentschwefelungsanlagen bzw. Seewasser REA's bei küstennahen Kraftwerken vorteilhaft, da hier das Seewasser als Absorbens anstelle von Kalkstein-Suspension verwendet werden kann. Die Sulfit-Oxidation des Ablaufwassers aus dem Meerwasser-Abgaswäscher erfolgt dabei üblicherweise in externen Oxidationsbecken. Durch Zumischung von Luft als Sauerstoff-Träger in das Oxidationsbecken wird der chemische Sauerstoffbedarf gedeckt und der Grad der Sauerstoff-Sättigung eingestellt. Die Luft wird in der Regel über den Boden eines Oxidationsbeckens gleichförmig zugegeben. Auf Grund der nötigen Verweildauer des Ablaufwassers für eine vollständige Sulfit-Oxidation ergibt sich für die Oxidationsbecken ein erheblicher Platzbedarf.

Herkömmliche Oxidationsbecken zur Behandlung von Ablaufwasser aus einem Meerwasser-Abgaswäscher sind aus der obigen Broschüre, sowie auch aus den Veröffentlichungen WO 2008/105212 A1, EP 0 504 550 A1, DE 10 2010 028573 A1, DE 10 2010 028571 A1, DE 87 08 201 U1, DE 28 44 046, WO 2012/117003 A1, DE 198 15 207 C1 und der EP 2 578 544 A1 bekannt.

Das Ablaufwasser, das sich am Boden des Abgaswäschers einer Seewasser REA mit einer sehr hohen Sulfit-Konzentration sammelt, hat einen sehr niedrigen pH-Wert. Es ist daher im Zusammenhang mit Oxidationsbecken bekannt, dass ein Mischwasserstrom gebildet wird bestehend aus dem Ablaufwasser des Abgaswäschers (mit einem pH-Wert von weniger als 4) und zusätzlichem Meerwasser, um den Mischwasserstrom auf einen höheren pH-Wert anzuheben. Solch ein Mischwasserstrom setzt sich aus ca. einem Drittel Ablaufwasser aus dem Wäscher und ca. zwei Dritteln zusätzlichem Meerwasser zusammen.

Bei bekannten Oxidationsbecken wird dieser Mischwasserstrom mittels eines Kanals oder einer Rohrleitung mit einer Strömungsgeschwindigkeit von ca. 1 bis 2 m/s zugeführt und wird stirnseitig in ein lang gestreckten Oxidationsbeckens eingeleitet. Um die nötige Verweilzeit im Becken zu erreichen, ist der Beckenquerschnitt um ca. einen Faktor von fünf größer als der Querschnitt der Zuleitung.

Ohne besondere Optimierung führt eine solche Querschnittsaufweitung zu einer ungleichmäßigen Durchströmung zumindest im ersten Abschnitt des Beckens. Um dies zu kompensieren, wird üblicherweise das Becken sehr lang ausgeführt. Weiterhin ergeben sich, je nachdem wie der Mischwasserstrom gebildet wird, auch ungewollte Sulfit-Konzentrationsunterschiede.

Aufgabe der Erfindung ist die strömungstechnische Optimierung eines externen Oxidationsbeckens.

Diese Aufgabe wird gelöst durch ein Oxidationsbecken zur Behandlung von Ablaufwasser aus einem Meerwasser-Abgaswäscher zum Entfernen von Schwefeldioxid aus dem Abgas mit einer Verteilerkammer, die einen Eingangsquerschnitt und einem größeren, durch die Breite des Oxidationsbeckens definierten Ausgangsquerschnitt aufweist, wobei die Verteilerkammer den Hauptstrom mit einer Einströmrichtung aufnimmt und ihn in Richtung der Längsrichtung des Oxidationsbeckens umlenkt und wobei sich im Ausgangsquerschnitt der Verteilerkammer eine im Wesentlichen parallel zur Einströmrichtung des Hauptstroms und über die Breite des Oxidationsbeckens hinweg auf Abstand angeordnete Reihe von Hauptstromstörkörpern befindet, zwischen denen hindurch der Hauptstrom aus der Verteilerkammer austritt.

Weiterhin weist die Verteilerkammer bevorzugterweise an der Seite der Zuleitung eine Anfangsquerschnittfläche senkrecht zur Einströmrichtung des Hauptstroms auf, wobei sich die Querschnittsfläche der Verteilerkammer senkrecht zur Einströmrichtung des Hauptstroms über die Breite des Oxidationsbeckens hinweg verringert und an einer der Zuleitung gegenüberliegenden Seite der Verteilerkammer ein Minimum erreicht.

Aufgrund von Form und Anordnung der Hauptstromstörkörper, sowie der Form der Verteilkammer wird die in der Mischkammer störende Geschwindigkeitskomponente der Einströmrichtung des Hauptstroms praktisch vollständig abgebaut.

Die Aufgabe wird ebenfalls durch ein in den Ansprüchen angeführtes Verfahren gelöst.

Bei dem erfindungsgemäßen Oxidationsbecken ergibt sich eine weitgehend homogene Strömungsverteilung über die Breite des Beckens hinweg. Durch die homogene Verteilung wird das Oxidationsbecken auf der kompletten Breite optimal genutzt und es ergeben sich nur geringe örtliche Abweichungen vom Geschwindigkeits-Mittelwert. Bei gleicher Verweilzeit kann somit das Becken kleiner ausgeführt werden. Zusätzlich ist weniger Oxidationsluft erforderlich, da bei inhomogener Strömungsverteilung die Oxidationsluft nicht optimal verteilt werden kann. Durch die Integrierung einer 90°-Umlenkung in die Querschnittsaufweitung ergibt sich eine vorteilhafte Platzersparnis für die Gesamtanlage.

Die Hauptstromstörkörper des Oxidationsbecken sind bevorzugterweise hohl ausgestaltet und Ablaufwasser des Wäschers wird als Nebenstrom durch die hohlen Hauptstromstörkörper in den Hauptstrom eingemischt. Hierdurch ergibt sich eine gleichmäßige Einmischung des Ablaufwassers in den Hauptstrom.

Besonders vorteilhaft ist die Einmischung des Nebenstroms in den turbulenten Nachlauf der Hauptstromstörkörper. Durch optimierte Zugabe des Teilstroms in den turbulenten Nachlauf der Hauptstromstörkörper wird eine bessere Durchmischung erzielt. In Folge ist weniger Oxidationsluft erforderlich. Bei einer Zumischung durch hohle Störkörper kann dies zum Beispiel über mindestens eine Reihe (bevorzugterweise zwei Reihen, die in einem Winkel zwischen 30° und 180°, vorzugsweise von 90° Grad, zueinander angeordneten sind) von übereinander angeordneten Störkörperdüsen geschehen, die den Nebenstrom in den turbulenten Nachlauf des Hauptstromes hinter den Störkörpern eindüsen, um so eine besonders schnelle Einmischung zu erreichen.

In einem Beispiel weist das Oxidationsbecken eine Mischkammer auf, die durch die Reihe von Hauptstromstörkörpern, die Seitenwände des Oxidationsbecken und eine Reihe von stromabwärts über die Breite des Oxidationsbeckens hinweg auf Abstand angeordneten Zusatzstörkörpern definiert ist, und in der der Hauptstrom mit dem Ablaufwasser zu Mischwasser vermischt wird. Dabei sind die Zusatzstörkörper stromabwärts auf Lücke mit den Hauptstromstörkörpern angeordnet, was die Durchmischung von Ablauf- und Zusatzmeerwasser fördert, bevor das Mischwasser in den Belüftungsabschnitt des Oxidationsbeckens gelangt.
Fig. 1 zeigt eine Teildarstellung des erfindungsgemäßen Oxidationsbeckens in der Aufsicht.
Fig. 2 zeigt einen vergrößerten Ausschnitt der Figur 1 im Bereich der Hauptstromstörkörper des erfindungsgemäßen Oxidationsbeckens.
Fig. 3 zeigt eine dreidimensionale Ansicht zweier Hauptstromstörkörper des erfindungsgemäßen Oxidationsbeckens.
Fig. 4a - 4d zeigen im Grundriss weitere bevorzugte Ausführungsformen für die Hauptstromstörkörper im erfindungsgemäßen Oxidationsbecken.
Fig. 5 zeigt im Grundriss ein weiteres Ausführungsbeispiel mit einer dem Hauptstromstörkörper nachgeordneten separaten Ablaufwasserzuleitung.

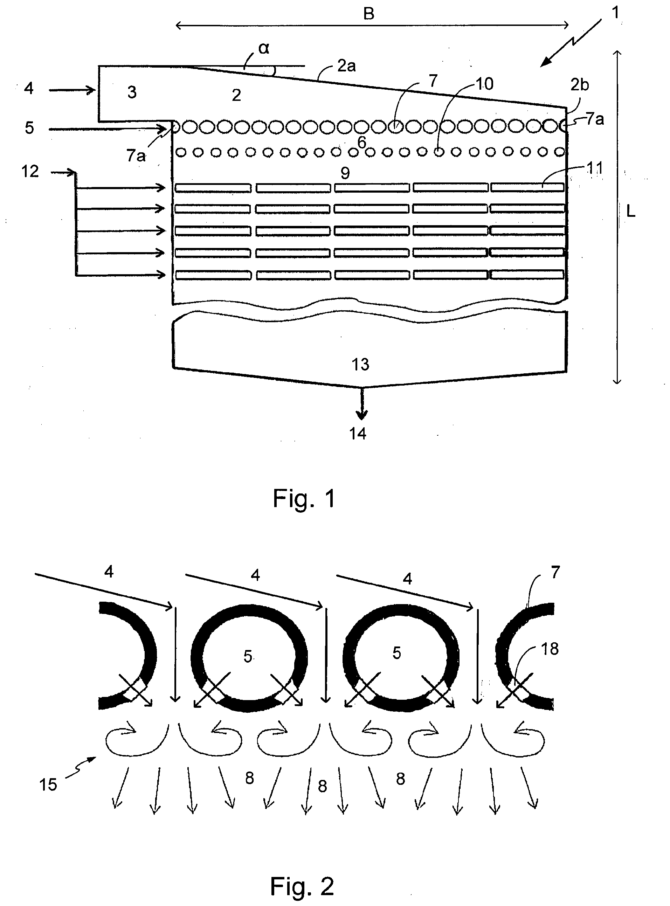

In der Fig. 1 ist ein erfindungsgemäßes Oxidationsbecken 1 zur Behandlung von Ablaufwasser aus einem Meerwasser-Abgaswäscher gezeigt. Bei dem in der Fig. 1 nicht dargestellten Meerwasser-Abgaswäscher handelt es sich im bevorzugten Ausführungsbeispiel um einen Rauchgaswäscher eines Kraftwerks, mit dem Schwefeldioxid aus dem Abgas des Kraftwerks entfernt wird. Die Rauchgasentschwefelung mittels Meerwasser in einem Wäscher, sowie die chemischen Prozesse zur Umsetzung des im Meerwasser absorbierten Schwefeldioxids in Sulfate sowie die Neutralisation des Ablaufwassers des Wäschers sind dem Fachmann bekannt und sind zum Beispiel in der genannten EP 2 578 544 sowie in der weiteren Druckschrift DE 198 15 207 beschrieben.

Das vorliegende Oxidationsbecken 1 könnte jedoch zum Beispiel auch zusammen mit einem Wäscher für Abgase einer Müllverbrennungsanlage oder Abgase eines Schmelzofens für die Verhüttung oder Abgase der petrochemischen Industrie/Ölraffinerie verwendet werden.

Das Oxidationsbecken 1 weist eine stirnseitig angeordnete Verteilerkammer 2 auf, in die über eine seitliche Zuleitung 3 ein im Folgenden als Hauptstrom 4 bezeichneter Meerwasserstrom in das Oxidationsbecken 1 eintritt. Wie einleitend beschrieben, wird das zusätzliche Meerwasser dazu verwendet, den pH-Wert des Ablaufwassers des Wäschers anzuheben. Ablaufwasser mit der durch den Wäscher eingetragenen Sulfit-Konzentration wird im Folgenden als Nebenstrom 5 bezeichnet. Bevorzugterweise stammt das zusätzliche Meerwasser des Hauptstroms zumindest teilweise vom Kraftwerkskondensator und wird über Rohrleitungen oder Kanäle, die in die Zuleitung 3 münden, bereitgestellt.

An die Verteilerkammer 2 schließt sich stromabwärts vom Hauptstrom 4 eine Mischkammer 6 des Oxidationsbeckens 1 an, die räumlich durch eine Reihe von mit Abstand angeordneten kreiszylindrischen Hauptstromstörkörpern 7 von der Verteilerkammer 2 abgegrenzt ist. Der Hauptstrom 4 strömt zwischen den Hauptstromstörkörpern 7 in die Mischkammer 6. Der Nebenstrom 5 wird ebenfalls über eine Zuleitung in die Mischkammer 6 geführt. In der Mischkammer 6 vermischen sich der Hauptstrom 4 und der Nebenstrom 5 miteinander zu Mischwasser 8. Gegebenenfalls kann ein Hauptteil des Ablaufwassers als Nebenstrom 5 und der verbleibende Teil an Ablaufwasser dem Oxidationsbecken nach der Mischkammer 6 zugeführt werden. Weiterhin weist das Oxidationsbecken einen Belüftungsabschnitt 9 auf, der räumlich durch eine Reihe von ebenfalls mit Abstand angeordneten kreiszylindrischen Zusatzstörkörpern 10 von der Mischkammer 6 abgegrenzt ist. In dem Belüftungsabschnitt 9 des Beckens befindet sich am Boden eine Vielzahl von Belüftungselementen 11 über die ein Luftstrom 12 gleichmäßig in das langsam durch das Becken strömende Mischwasser 8 eingeblasen wird. Der Sauerstoff in der eingeblasenen Luft deckt den chemischen Sauerstoffbedarf bei der Oxidation der im Ablaufwasser befindlichen Sulfite. Der verbleibende Rest der Luft gelangt über die Wasseroberfläche in die Umgebung. Während die Belüftungselemente 11 quer zur Strömungsrichtung des Hauptstroms 4 skizziert sind, wird der Fachmann erkennen, dass deren Orientierung und deren Anzahl je nach Anwendung gewählt werden kann.

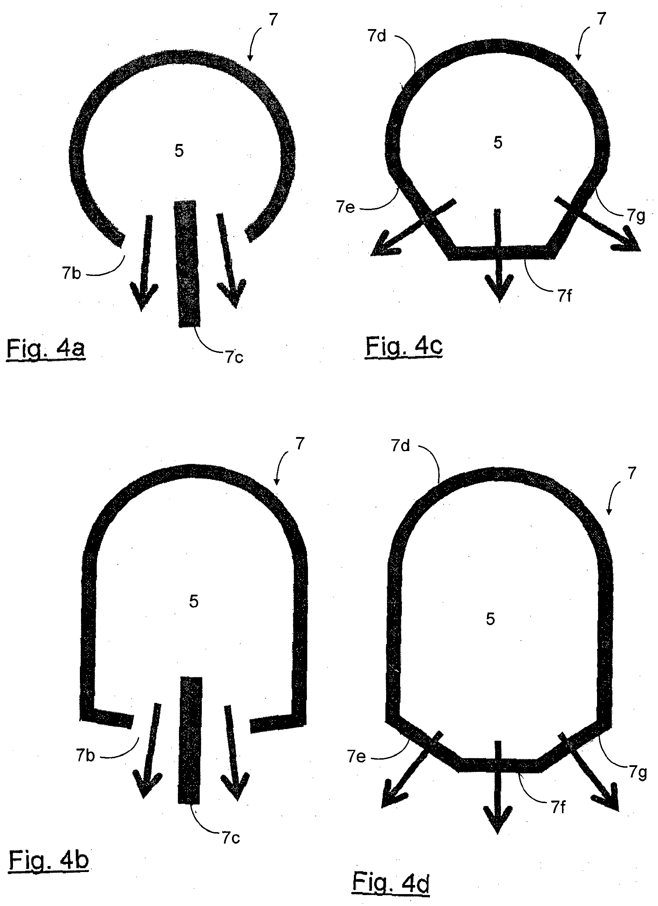

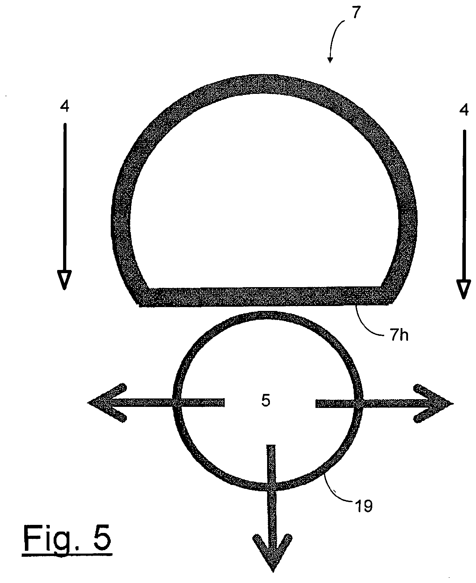

Für die Hauptstromstörkörper 7 und die Zusatzstörkörper 10 können andere, von der kreiszylindrischen Form abweichende Zylinderformen eingesetzt werden, wie sie zum Beispiel später anhand der Fig. 4a - 4d und Fig. 5 beschrieben werden.

An den Belüftungsabschnitt 9 schließt sich eine Ableitung 13 an, über die das Mischwasser 8 nach erfolgter Sulfatbildung und Neutralisation aus dem Oxidationsbecken 1 als aufbereiteter Wasserstrom 14 austritt und dem Meer wieder zugeführt werden kann.

Im bevorzugten Ausführungsbeispiel weist das Oxidationsbecken 1 eine Breite B von ca. 40 Metern und in Längsrichtung eine Länge L von ca. 100 Metern auf, um eine ausreichende Verweilzeit des Mischwassers 8 im Oxidationsbecken 1 zu erreichen. Das Oxidationsbecken 1 weist eine beispielhafte Tiefe von sechs Metern auf und ist vorzugsweise nach oben offen, damit die Reste der am Boden eingedüsten Luft möglichst ungestört entweichen können.

Die Störkörper 7 und 10 haben eine Höhe H, die der Tiefe des Beckens entspricht. Im Beispiel beträgt der Durchmesser D der Hauptstromstörkörper 7 ca. 1,4 Meter und der Abstand S zwischen den Hauptstromstörkörpern 7 beträgt ca. 0,3 Meter. Der Durchmesser der Zusatzstörkörper 10 ist kleiner dimensioniert als der der Hauptstromstörkörper 7 (bevorzugterweise beträgt der Durchmesser die Hälfte des Durchmessers der Hauptstromstörkörper 7). Die obigen Abmaße sind jedoch nur als beispielhaft anzusehen und können ggf. vom Fachmann variiert werden.

In Fig. 1 sind die Zusatzstörkörper 10 gemäß dem bevorzugten Ausführungsbeispiel auf Lücke mit den Hauptstromstörkörpern 7 angeordnet, um die Vermischung von Haupt- und des Nebenstrom zu unterstützen. Gemäß weiterer Ausführungsbeispiele, bei denen die Anzahl der Zusatzstörkörper 10 nicht gleich der Anzahl der Hauptstromstörkörper 7 ist (oder aus anderen bautechnischen Maßnahmen) kann auch von einer Anordnung der Zusatzstörkörper 10 auf Lücke mit den Hauptstromstörkörpern 7 abgesehen werden. Sowohl die Zusatzstörkörper 10 als auch die Hauptstromstörkörper 7 sind im Wesentlichen zylindrisch ausgestaltet, können aber gemäß anderer Ausführungsbeispiele auch zum Beispiel im Grundriss U-förmig ausgestaltet sein. Vorteilhafterweise ist der Grundriss zumindest der Hauptstromstörkörper 7 anströmseitig gerundet und abströmseitig so ausgestaltet, dass ein Strömungsabriss ermöglicht wird.

Im bevorzugten Ausführungsbeispiel sind Hauptstromstörkörper 7 und Zusatzstörkörper 10 aus demselben Material wie das Becken selbst (zum Beispiel aus Beton) gefertigt und der Radius der Zusatzstörkörper 10 ist kleiner als der Radius der Hauptstromstörkörper 7. Der Grundriss der Zusatzstörkörper 10 kann grundsätzlich vom Grundriss der Hauptstromstörkörper 7 abweichen und z.B. auch polygonal, insbesondere dreieckig oder viereckig, ausgeführt sein.

Gegenüber herkömmlichen Oxidationsbecken ist das erfindungsgemäße Oxidationsbecken 1 bei gleicher Verweilzeit und gleichem Entschwefelungsgrad kleiner dimensioniert (insbesondere bezüglich der Länge des Beckens). Außerdem ist im Vergleich zu herkömmlichen Oxidationsbecken weniger Oxidationsluft erforderlich, da bei dem erfindungsgemäßen Oxidationsbecken 1 eine homogenere Strömungsverteilung und örtlich kleinere Geschwindigkeiten erreicht werden.

Im Folgenden wird die Funktionsweise der Verteilerkammer 2 und Mischkammer 6, mit denen die homogene Verteilung der Strömung über die ganze Beckenbreite B erreicht wird, genauer beschrieben.

Die Verteilerkammer 2 weist an der Seite der Zuleitung 3 eine vorbestimmte Anfangsquerschnittfläche senkrecht zur Einströmrichtung des Hauptstroms 4 auf. In dem in der Figur 1 dargestellten bevorzugten Ausführungsbeispiel verjüngt sich die Verteilerkammer 2 in Richtung des durch die Zuleitung 3 einströmenden Hauptstromes 4, d.h. die Querschnittsfläche der Verteilerkammer 2 senkrecht zur Einströmrichtung des Hauptstroms verringert sich über die Breite B des Oxidationsbeckens 1 hinweg und erreicht an einer zur Zuleitung 3 gegenüberliegenden Seite 2b der Verteilerkammer 2 ein Minimum. Die stirnseitige Wand 2a der Verteilerkammer bildet dabei einen Winkel α zu der Reihe von Hauptstromstörkörpern 7. Der Winkel α wird bevorzugterweise aus einem Intervall von 5° - 10° Grad gewählt. Im gezeigten Ausführungsbeispiel ist α=7°. Die Querschnittsfläche am Einlass bzw. der Zuleitung der Verteilerkammer 2 bildet den Eingangsquerschnitt der Verteilerkammer 2. Die Verteilerkammer 2 weist einen zum Eingangsquerschnitt senkrecht verlaufenden Ausgangsquerschnitt auf, der durch die Breite B definiert wird und der ein Vielfaches des Eingangsquerschnitts beträgt.

Der einströmende Hauptstrom 4 erfährt in der Verteilerkammer 2 eine 90°-Umlenkung und gelangt auf der gesamten Breite B über die Zwischenräume S aus der Verteilerkammer 2 in die Mischkammer 6. Bei der vorliegenden Gleichdruckumlenkung des Hauptstroms 4 strömt das Meerwasser in allen Zwischenräumen S mit näherungsweise gleicher Geschwindigkeit, wodurch sich im weiteren Strömungsverlauf des Wassers im Belüftungsabschnitt 9 im Oxidationsbeckens 1 ein über die Breite B des Beckens im wesentlichen gleichförmiges Geschwindigkeitsprofil ausbildet.

Durch die Diffusorwirkung der Zwischenräume S ergibt sich im Nachlauf der Hauptstromstörkörper 7 ein turbulenter Nachlauf 15, in den bevorzugterweise der Nebenstrom 5 des Ablaufwassers eingeleitet wird.

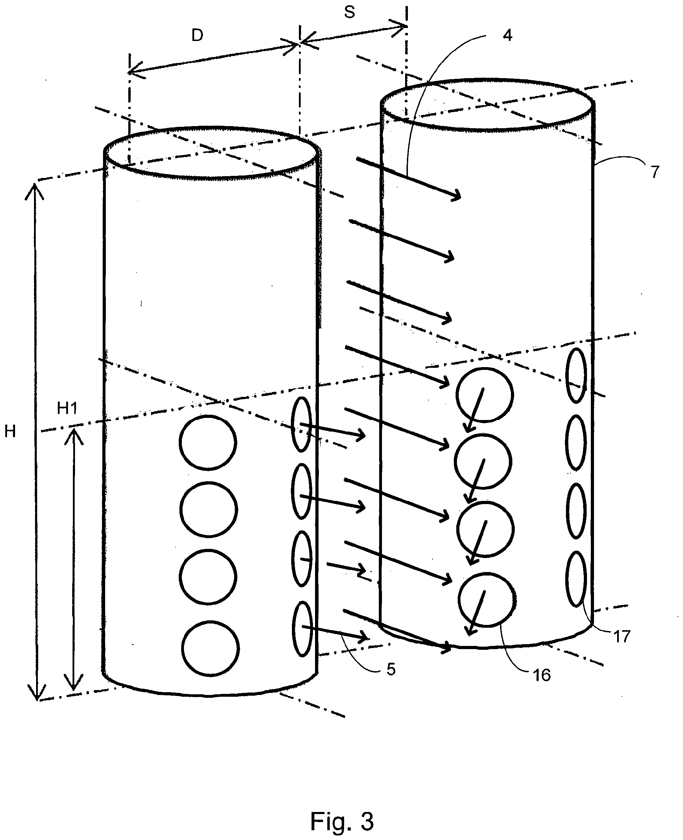

Gemäß dem bevorzugten Ausführungsbeispiel bilden die Hauptstromstörkörper 7 die Zuleitung für den Nebenstrom 5 in die Mischkammer 6. Hierfür sind die Hauptstromstörkörper 7 hohl ausgestaltet und das Ablaufwasser wird als Nebenstrom 5 durch die hohlen Hauptstromstörkörper 7 in den turbulenten Nachlauf 15 des Hauptstromes 4 nach dem Durchtritt durch die Zwischenräume S zugeführt. Wie aus den Fig. 2 und 3 ersichtlich weist jeder hohle Hauptstromstörkörper 7 zwei Reihen 16, 17 von übereinander angeordneten Düsen 18 auf, durch die der Nebenstrom 5 eingedüst wird. Um ein unerwünschtes Ausgasen von SO₂ zu vermeiden, befinden sich die Düsen mit hinreichendem Abstand unterhalb der Wasseroberfläche, der Abstand beträgt z.B. H/2. Die Düsenreihen 16, 17 befinden sich somit unterhalb einer Höhe H1 vom Beckenboden aus. Die Zuleitung des Nebenstroms 5 in die Hauptstromstörkörper 7 erfolgt von oben oder von unten über einen externen Kanal so, dass die Zuführung an allen Stellen gleich erfolgt.

Bevorzugterweise sind gemäß Fig. 2 die zwei Reihen 16, 17 von Düsen an der Abströmseite der Hauptstromstörkörper 7 in einem Winkel von 90° zu einander angeordnet und bilden gegenüber einer senkrecht zur Ausdehnung des Zwischenraumes S verlaufenden Hauptaustrittsströmung einen Winkel von 45°. Die Anzahl der Düsenreihen 16, 17, deren Abstand zur Wasseroberfläche, sowie der Winkel zueinander kann der Fachmann jedoch gemäß weiterer Ausführungsbeispiele variieren. Bei einer U-Form der Hauptstromkörpers 7 wird der Fachmann zum Beispiel den Winkel der Düsenreihen zueinander und zur Hauptaustrittsströmung anpassen. Gemäß weiteren Ausführungsformen ist auch ein Anordnen der Reihen 16, 17 mit zueinander versetzten Höhen möglich. In Fig. 2 sind Düsen 18 mit Kreisquerschnitt dargestellt, es sind jedoch auch Düsenquerschnitte, zum Beispiel Ovaldüsen oder Schlitzdüsen, möglich.

Weitere Beispiele für bevorzugte Ausführungsformen der Hauptstromstörkörper 7 sind in Fig. 4a bis 4d als Grundriss dargestellt.

Hierbei zeigt Fig. 4a im Grundriss einen säulenförmigen bzw. zylindrischen Hauptstromstörkörper 7 mit im wesentlichen kreiszylindrischem Grundriss, der abströmseitig eine spaltartige Öffnung 7b aufweist, die sich vom Beckenboden bis zu einer vorbestimmten Höhe am Hauptstromstörkörper erstreckt. Die Öffnung 7b wird durch eine Leitelement bzw. -fahne 7c in zwei im wesentlichen gleich große Schlitzdüsen aufgeteilt, durch die Ablaufwasser ins Becken eingedüst werden kann. Die Leitfahnen 7c der Hauptstromstörkörper zergliedern den sich in der Mischkammer 5 bildende Mischwasserstrom 8 in Unterströme und stabilisieren dadurch die Gesamtströmung im Becken.

Fig. 4b zeigt einen zylindrischen Hauptstromstörkörper 7 mit einem ähnlichen Aufbau wie Fig. 4a jedoch basierend auf einem im wesentlichen U-förmigen Grundriss.

Figur 4c zeigt einen zylindrischen Hauptstromstörkörper 7 mit einem im wesentlichen halbkreiszylindrischen Teil 7d und daran anschließende, planen Seiten 7e, 7f, 7g, die gegeneinander gewinkelt sind. In diesen planen Seiten 7e, 7f, 7g ist jeweils eine Düse oder eine Düsenreihe angeordnet, so das Ablaufwasser in insgesamt drei Richtungen in den turbulenten Nachlauf des Hauptstromkörpers 7 eingedüst werden kann.

Fig. 4d zeigt einen zylindrischen Hauptstromstörkörper 7 mit einem ähnlichen Aufbau wie Fig. 4c jedoch basierend auf einem im wesentlichen U-förmigen Grundriss.

Gemäß einem weiteren Ausführungsbeispiel nach Fig. 5 kann die Zuführung des Nebenstromes 5 aber auch über eine von den Hauptstromstörkörpern 7 separate Zuleitung 19 mit verschiedenen Auslassöffnungen, die einzelnen Hauptstromstörkörpern 7 zugeordnet sind, erfolgen, um das Ablaufwasser in den turbulenter Nachlauf 15 in die Mischkammer 6 einzubringen. Wie in der Fig. 5 gezeigt, weist in diesem weiteren Ausführungsbeispiel jeder Hauptstromstörkörper 7 eine im wesentlichen zylindrischen Form auf mit einer abströmseitigen Abflachung 7h, bei der ein separates, zylindrisches Ablaufwasserzuleitungselement 19 (zum Beispiel eine Düsenlanze 19) angeordnet ist, über das Ablaufwasser in Strömungsrichtung des Hauptstroms 4 und senkrecht hierzu in den turbulenten Nachlauf des Hauptstromstörkörpers 7 eingedüst wird. Das Ablaufwasserzuleitungselement 19 kann vorteilhafterweise aus einem säurebeständigem Material, wie zum Beispiel GFK, bestehen und so ggf. eine aufwendige Beschichtung des Betons einsparen.

Wie aus der Fig. 1 ersichtlich befinden sich an den Seitenwänden des Oxidationsbeckens 1 zwei "halbe" Randhauptstromstörkörper 7a, die vorteilhafterweise die Ablösung der Grenzschicht am Beckenseitenrand steuern.

In der Mischkammer 6 vermischt sich der Hauptstrom 4 mit dem Nebenstrom 5 zu einem Mischwasserstrom 8, der über Zwischenräume zwischen den Zusatzstörkörpern 10 in den Belüftungsabschnitt 9 des Beckens austritt. Durch die Zusatzstörkörper 10 wird das Geschwindigkeitsprofil des Mischwasserstroms 8 über die Breite B des Beckens hinweg stabilisiert. Durch das Setzen der Zusatzstörkörper 10 auf Lücke mit den Hauptstromstörkörpern 7 kann eine weitergehende Durchmischung erreicht werden. Dabei können die Zusatzstörkörper 10 ggf. ebenfalls hohl ausgestaltet sein und weiteres zusätzliches Meerwasser oder Ablaufwasser über die Zusatzstörkörper 10 eingemischt werden. Hierzu können die einzelnen Zusatzstörkörper 10 mit Düsen ähnlich wie für die Hauptstromstörkörper 7 gemäß Fig. 3 und 4 ausgestaltet sein oder eine zugeordnete, separate Zuleitung gemäß Fig. 5 aufweisen.

Das Verfahren zur Behandlung von Ablaufwasser eines Meerwasser-Abgaswäschers zum Entfernen von Schwefeldioxid aus dem Abgas im Oxidationsbecken 1, in dem Ablaufwasser zum Zwecke der Sulfatbildung und zur Neutralisation zusammen mit zusätzlichem Meerwasser vermischt wird kann in Folgenden Schritte gegliedert werden:
Einströmen des Hauptstromes 4 in die Oxidationsbeckenverteilerkammer 2 mit einem Eingangsquerschnitt und einem größeren, durch die Breite B des Oxidationsbeckens definierten Ausgangsquerschnitt in eine Richtung im Wesentlichen parallel zu der im Ausgangsquerschnitt der Verteilerkammer 2 über die Breite B des Oxidationsbeckens 1 hinweg auf Abstand angeordnete Reihe von Hauptstromstörkörpern;
Umlenken des Hauptstromes 4 in der Verteilerkammer 2 in Längsrichtung des Oxidationsbeckens; und
Austreten des Hauptstroms 4 aus der Verteilerkammer 2 durch Lücken zwischen den Hauptromstörkörpern 7.

Zusätzlich kann das Verfahren noch einen oder mehrere der folgenden Schritte aufweisen:
Eindüsen des Nebenstromes 5 in den Hauptstrom 4 durch in den Hauptstromstörkörpern 7 befindliche Düsen, wobei der Nebenstrom 4 in den turbulenten Nachlauf des Hauptstromes nach den Hauptstromstörkörpern 7 eingebracht wird;
Mischen des Hauptstromes 4 und des Nebenstromes 5 in der Mischkammer 6 des Oxidationsbeckens; und
Austreten des hierdurch gebildeten Mischwassers 8 über eine weitere Reihe von Zusatzstörkörpern 10 aus der Mischkammer 6 in einen Belüftungsabschnitt 9 des Oxidationsbeckens 1.

### Bezugszeichenliste

- 1: Oxidationsbecken
- 2: Verteilerkammer
- 2a: stirnseitige Wand der Verteilerkammer
- 2b: Seite der Verteilerkammer
- 3: Zuleitung
- 4: Hauptstrom
- 5: Nebenstrom
- 6: Mischkammer
- 7: Hauptstromstörkörper
- 7a: Randhauptstromstörkörper
- 7b: Öffnung in Hauptstromstörkörper
- 7c: Leitfahne bzw. Leitelement
- 7d: halbkreiszylindrischer Teil
- 7e, 7f, 7g: plane Seiten
- 7h: Abflachung
- 8: Mischwasser
- 9: Belüftungsabschnitt
- 10: Zusatzstörkörpern
- 11: Belüftungselemente
- 12: Luftstrom
- 13: Ableitung
- 14: aufbereiteter Wasserstrom
- 15: turbulenter Nachlauf
- 16, 17: Düsenreihen
- 18: Düse
- 19: Ablaufwasserzuleitungselement
- B: Breite des Oxidationsbeckens
- L: Länge des Oxidationsbeckens
- S: Zwischenräume bei den Hauptstromstörkörpern
- α: Winkel zwischen stirnseitiger Wand der Verteilerkammer und der Reihe von Hauptstromstörkörpern
- H: Höhe der Hauptstrom- und Zusatzstörkörper

## Patentansprüche

1. Oxidationsbecken (1) zur Behandlung von Ablaufwasser aus einem Meerwasser-Abgaswäscher zum Entfernen von Schwefeldioxid aus dem Abgas, insbesondere aus einem Rauchgaswäscher eines Kraftwerks, in dem das Ablaufwasser zum Zwecke der Sulfatbildung und Neutralisation zusammen mit zusätzlichem Meerwasser vermischt wird und der Mischung in einem Belüftungsabschnitt (9) des nach oben offenen Oxidationsbeckens über am Boden befindliche Belüftungselemente (11) Oxidationsluft zugeführt wird, wobei das zusätzliche Meerwasser als Hauptstrom (4) über eine Zuleitung (3) und Ablaufwasser als Nebenstrom (5) über eine weitere Zuleitung in das Oxidationsbecken geführt werden, **dadurch gekennzeichnet, dass**
das Oxidationsbecken (1) eine Verteilerkammer (2) mit einem Eingangsquerschnitt und einem größeren, durch die Breite des Oxidationsbeckens definierten Ausgangsquerschnitt aufweist, wobei die Verteilerkammer (2) den Hauptstrom mit einer Einströmrichtung aufnimmt und ihn in Richtung der Längsrichtung des Oxidationsbeckens umlenkt und wobei sich im Ausgangsquerschnitt der Verteilerkammer (2) eine im Wesentlichen parallel zur Einströmrichtung des Hauptstroms und über die Breite (B) des Oxidationsbeckens hinweg auf Abstand angeordnete Reihe von Hauptstromstörkörpern (7) befindet, zwischen denen der Hauptstrom (4) aus der Verteilerkammer austritt und
dass die Verteilerkammer (2) an der Seite der Zuleitung (3) eine Anfangsquerschnittfläche senkrecht zur Einströmrichtung des Hauptstroms aufweist, wobei sich die Querschnittsfläche der Verteilerkammer (2) senkrecht zur Einströmrichtung des Hauptstroms über die Breite des Oxidationsbeckens (1) hinweg verringert und an einer zur Zuleitung (3) gegenüberliegenden Seite der Verteilerkammer (2) ein Minimum erreicht.

2. Oxidationsbecken (1) nach Anspruch 1, **dadurch gekennzeichnet, dass** das Oxidationsbecken eine Mischkammer (6) aufweist, die durch die Reihe von Hauptstromstörkörpern (7), die Seitenwände des Oxidationsbecken und eine Reihe von stromabwärts über die Breite (B) des Oxidationsbeckens hinweg auf Abstand angeordneten Zusatzstörkörpern (10) definiert ist, und in der der Hauptstrom (4) mit dem Nebenstrom (5) zu Mischwasser (8) vermischt wird.

3. Oxidationsbecken (1) nach Anspruch 2, **dadurch gekennzeichnet, dass** die Zusatzstörkörper (10) stromabwärts der Hauptstromstörkörper (7) angeordnet sind und dass das Mischwasser (8) zwischen den Zusatzstörkörpern (10) hindurch in den Belüftungsabschnitt (9) des Oxidationsbeckens gelangt.

4. Oxidationsbecken (1) nach Ansprüchen 2 oder 3, **dadurch gekennzeichnet, dass** die Hauptstromstörkörper (7) und die Zusatzstörkörper (10) im Wesentlichen zylindrisch, vorzugsweise kreiszylindrisch, ausgestaltet sind.

5. Oxidationsbecken (1) nach einem der Ansprüche 1-4, **dadurch gekennzeichnet, dass** jedem Hauptstromstörkörper (7) ein Ablaufwasserzuleitungselement (19) nachgeordnet ist, und der Nebenstrom (5) über die Ablaufwasserzuleitungselemente (19) eingemischt wird.

6. Oxidationsbecken (1) nach einem der Ansprüche 1-4, **dadurch gekennzeichnet, dass** die Hauptstromstörkörper (7) hohl ausgestaltet sind und dass der Nebenstrom (5) durch die hohlen Hauptstromstörkörper (7) in den Hauptstrom (4) eingemischt wird.

7. Oxidationsbecken (1) nach Anspruch 6, **dadurch gekennzeichnet, dass** die Einmischung des Nebenstroms (5) über mindestens eine Reihe (16, 17) von übereinander angeordneten Störkörperdüsen geschieht, die den Nebenstrom (5) in einen turbulenten Nachlauf (15) des Hauptstromes (4) nach den Hauptstromstörkörpern (7) eindüsen.

8. Oxidationsbecken (1) nach Anspruch 7, **dadurch gekennzeichnet, dass** jeder Hauptstromstörkörper (7) zwei Reihen (16, 17) von Düsen (18) aufweist, die an der Abströmseite der Hauptstromstörkörper (7) in einem Winkel zu einander angeordnet sind, wobei der Winkel bevorzugterweise 90° beträgt.

9. Oxidationsbecken (1) nach einem der Ansprüche 2-4 und einem der Ansprüche 6-8, **dadurch gekennzeichnet, dass** die Zusatzstörkörper (10) ebenfalls hohl ausgestaltet sind und weiteres zusätzliches Meerwasser oder Ablaufwasser über die Zusatzstörkörper (10) eingemischt wird.

10. Verfahren zur Behandlung von Ablaufwasser eines Meerwasser-Abgaswäschers zum Entfernen von Schwefeldioxid aus dem Abgas, insbesondere eines Rauchgaswäschers eines Kraftwerks, in einem Oxidationsbecken (1), in dem Ablaufwasser zum Zwecke der Sulfatbildung und zur Neutralisation zusammen mit zusätzlichem Meerwasser vermischt wird, wobei das zusätzliche Meerwasser als Hauptstrom (4) über eine Zuleitung (3) und Ablaufwasser als Nebenstrom (5) über eine weitere Zuleitung in das Oxidationsbecken (1) geführt werden, **gekennzeichnet durch**
Einströmen des Hauptstromes in eine Oxidationsbeckenverteilerkammer (2) mit einem Eingangsquerschnitt und einem größeren, durch die Breite des Oxidationsbeckens definierten Ausgangsquerschnitt in eine Richtung im Wesentlichen parallel zu einer im Ausgangsquerschnitt der Verteilerkammer (2) über die Breite (B) des Oxidationsbeckens hinweg auf Abstand angeordneten Reihe von Hauptstromstörkörpern (7);
Umlenken des Hauptstromes (4) in der Verteilerkammer (2) in Längsrichtung des Oxidationsbeckens;
Austreten des Hauptstroms (4) aus der Verteilerkammer (2) durch Lücken zwischen den Hauptromstörkörpern (7); und
Zuführen von Oxidationsluft in die Mischung aus Ablaufwasser und zusätzlichem Meerwasser über Belüftungselemente (11), die sich am Boden eines Belüftungsabschnittes (9) des nach oben offenen Oxidationsbeckens befinden,
wobei die Verteilerkammer (2) an der Seite der Zuleitung (3) eine Anfangsquerschnittfläche senkrecht zur Einströmrichtung des Hauptstroms aufweist, wobei sich die Querschnittsfläche der Verteilerkammer (2) senkrecht zur Einströmrichtung des Hauptstroms über die Breite des Oxidationsbeckens (1) hinweg verringert und an einer zur Zuleitung (3) gegenüberliegenden Seite der Verteilerkammer (2) ein Minimum erreicht.

11. Verfahren nach Anspruch 10, **gekennzeichnet durch** Eindüsen des Nebenstroms (5) in den Hauptstrom (4) durch in den Hauptstromstörkörpern (7) befindliche Düsen oder durch den Hauptstromstörkörpern (7) nachgeordnete Ablaufwasserzuleitungselemente (19), wobei der Nebenstrom (5) in einen turbulenten Nachlauf des Hauptstromes nach den Hauptstromstörkörpern (7) eingebracht wird.

12. Verfahren nach Anspruch 11, **gekennzeichnet durch** Mischen des Hauptstromes (4) und des Nebenstromes (5) in einer Mischkammer (6) des Oxidationsbeckens und Austreten des so gebildeten Mischwassers (8) über eine weitere Reihe von Zusatzstörkörpern (10) aus der Mischkammer (6) in den Belüftungsabschnitt (9) des Oxidationsbeckens.

## Claims

1. Oxidation tank (1) for treating effluent water from a seawater flue gas scrubber for removing sulphur dioxide from exhaust gas, particularly from a flue gas scrubber of a power plant, wherein the effluent water is mixed with additional seawater for the purpose of forming sulphate and neutralization, and wherein oxidation air is added to the mixture via ventilation elements (11) located at the bottom in a ventilation section (9) of the oxidation tank which is open to the top, wherein the additional seawater is directed as a primary flow (4) via an inlet (3) and the effluent water is directed as a secondary flow (5) via an additional inlet into the oxidation tank, **characterized in that**
the oxidation tank (1) comprises a distribution chamber (2) having an inlet cross-section and a larger output cross-section defined by the width of the oxidation tank, wherein the distribution chamber (2) receives the primary flow in an inlet flow direction and redirects the primary flow in the longitudinal direction of the oxidation tank, and wherein a row of primary flow disturbance members (7) is located in the output cross-section of the distribution chamber (2), wherein the row of primary flow disturbance members is substantially parallel to the input flow direction of the primary flow and is spaced over the width (B) of the oxidation tank and wherein the primary flow (4) exits from the distribution chamber therebetween, and **in that**
the distribution chamber (2) comprises an initial cross-sectional area perpendicular to the inlet flow direction of the primary flow at the side of the inlet (3), wherein the cross-sectional area of the distribution chamber (2) perpendicular to the inlet flow direction of the primary flow decreases over the width of the oxidation tank (1) and becomes minimal at a side of the distribution chamber (2) opposite the inlet (3).

2. Oxidation tank (1) according to claim 1, **characterized in that** the oxidation tank comprises a mixing chamber (6) which is defined by the row of primary flow disturbance members (7), the lateral walls of the oxidation tank and a row of auxiliary disturbance members (10) which are spaced over a width of the oxidation tank, and wherein the primary flow (4) and the secondary flow (5) are mixed to form mixed water (8).

3. Oxidation tank (1) according to claim 2, **characterized in that** the auxiliary disturbance members (10) are located downstream of the main disturbance member (7), and **in that** the mixed water (8) flows between the auxiliary disturbance members (10) into the ventilation section (9) of the oxidation tank.

4. Oxidation tank (1) according to claims 2 or 3, **characterized in that** the primary flow disturbance member (7) and the auxiliary disturbance members (10) are formed cylindrically, preferably cylindrically having a constant radius.

5. Oxidation tank (1) according to one of claims 1 to 4, **characterized in that** an effluent water inlet element (19) is located downstream of each primary flow disturbance member (7), and **in that** the secondary flow (5) is fed in via the effluent water inlet elements (19).

6. Oxidation tank (1) according to one of claims 1 to 4, **characterized in that** the primary flow disturbance member (7) is hollow, and **in that** the secondary flow (5) is mixed into the primary flow (7) by means of the hollow primary flow disturbance members (7).

7. Oxidation tank (1) according to claim 6, **characterized in that** feeding the secondary flow (5) is carried out by means of at least one row (16, 17) of disturbance member nozzles which are located one above the other and feed the secondary flow (5) into a turbulent tail flow (15) of the primary flow (4) after the primary flow disturbance members (7).

8. Oxidation tank (1) according to claim 7, **characterized in that** each primary flow disturbance member (7) comprises two rows (16, 17) of nozzles (18) which are arranged at an angle to each other at the outlet flow side of the primary flow disturbance member (7), and wherein the angle is preferably 90°.

9. Oxidation tank (1) according to one of claims 2 to 4 and one of claims 6 to 8, **characterized in that** the auxiliary disturbance member (10) is also hollow, and **in that** another additional seawater or effluent water is fed in via the auxiliary disturbance members (10).

10. Method for treating effluent water from a seawater flue gas scrubber for removing sulphur dioxide from exhaus gas in an oxidation tank (1), particularly from a flue gas scrubber of a power plant, wherein effluent water is mixed with additional seawater for the purpose of forming sulphate and neutralization, wherein the additional seawater is directed as a primary flow (4) via an inlet (3) and the effluent water is directed as a secondary flow (5) via an additional inlet into the oxidation tank (1), **characterized by** feeding the primary flow (10) into an oxidation tank distribution chamber (2) having an inlet cross-sectional area and a larger cross-sectional area defined by the width of the oxidation tank in a direction substantially parallel to a row of primary flow disturbance members (7) located in the outlet cross-sectional area of the distribution chamber (2) and spaced over the width (B) of the oxidation tank;
re-directing the primary flow (4) in the distribution chamber (2) in the longitudinal direction of the oxidation tank;
discharging the primary flow (4) from the distribution chamber (2) through gaps between the primary flow disturbance members (7); and
feeding oxidation air in the mixture of effluent water and additional seawater via ventilation elements (11) which are located at the bottom of a ventilation section (9) of the oxidation tank which is open to the top, wherein the distribution chamber (2) comprises an initial cross-sectional area perpendicular to the inlet direction of the primary flow at the side of the inlet (3), wherein the cross-sectional area of the distribution chamber perpendicular to the inlet flow direction of the primary flow decreases over the width of the oxidation tank (1) and becomes minimal at a side of the distribution chamber opposite the inlet (3).

11. Method according to claim 10, **characterized by** feeding the secondary flow (5) into the primary flow (4) via nozzles located in the primary flow disturbance members (7) or via effluent water inlet elements (19) located downstream of the primary flow disturbance members (7), wherein the secondary flow (5) is fed into a turbulent tail flow of the primary flow downstream of the primary flow disturbance members (7).

12. Method according to claim 11, **characterized by** mixing the primary flow (4) and the secondary flow (5) in a mixing chamber (6) of the oxidation tank and discharging the mixed water (8) formed in this way via an additional row of auxiliary disturbance members (10) from the mixing chamber (6) into the ventilation section (9) of the oxidation tank.

## Revendications

1. Cuve d'oxydation (1) destinée au traitement d'une eau de décharge provenant d'un dispositif d'épuration d'effluents gazeux à l'eau de mer destiné à éliminer le dioxyde de soufre des gaz d'échappement, en particulier d'un dispositif d'épuration d'effluents gazeux d'une centrale électrique, dans laquelle les eaux de décharge sont mélangées avec de l'eau de mer supplémentaire aux fins de former un sulfate et de neutraliser, et dans lequel de l'air d'oxydation est ajouté au mélange via des éléments de ventilation (11) situés au fond dans une section de ventilation (9) de la cuve d'oxydation qui est ouverte au niveau du sommet, dans laquelle l'eau de mer supplémentaire est dirigée en tant qu'écoulement primaire (4) via une admission (3) et l'eau de décharge est dirigée en tant qu'écoulement secondaire (5) via une autre admission dans la cuve d'oxydation, **caractérisée en ce que**
la cuve d'oxydation (1) comprend une chambre de distribution (2) ayant une section transversale d'admission et une section transversale de sortie plus grande définie par la largeur de la cuve d'oxydation, dans laquelle la chambre de distribution (2) reçoit l'écoulement primaire selon une direction d'écoulement d'admission et redirige l'écoulement primaire dans la direction longitudinale de la cuve d'oxydation, et dans laquelle une rangée d'éléments perturbateurs de l'écoulement primaire (7) est située dans la section transversale de sortie de la chambre de distribution (2), dans laquelle la rangée d'éléments perturbateurs de l'écoulement primaire est sensiblement parallèle à la direction de l'écoulement d'admission de l'écoulement primaire et est espacée sur la largeur (B) de la cuve d'oxydation et dans laquelle l'écoulement primaire (4) sort de la chambre de distribution entre ceux-ci,
et **en ce que**
la chambre de distribution (2) comprend une surface transversale initiale perpendiculaire à la direction d'écoulement d'admission de l'écoulement primaire du côté de l'admission (3), dans laquelle la surface transversale de la chambre de distribution (2) perpendiculaire à la direction d'écoulement d'admission de l'écoulement primaire décroît le long de la largeur de la cuve d'oxydation (1) et devient minimale d'un côté de la chambre de distribution (2) opposé à l'admission (3).

2. Cuve d'oxydation (1) selon la revendication 1, **caractérisée en ce que** la cuve d'oxydation comprend une chambre de mélange (6) qui est définie par la rangée d'éléments perturbateurs de l'écoulement primaire (7), les parois latérales de la cuve d'oxydation et une rangée d'éléments perturbateurs supplémentaires (10) qui sont espacés sur une largeur de la cuve d'oxydation, et dans laquelle l'écoulement primaire (4) et l'écoulement secondaire (5) sont mélangés pouur former une eau mélangée (8).

3. Cuve d'oxydation (1) selon la revendication 2, **caractérisée en ce que** les éléments perturbateurs supplémentaires (10) sont situés en aval des éléments perturbateurs principaux (7), et **en ce que** l'eau mélangée (8) s'écoule entre les éléments perturbateurs supplémentaires (10) dans la section de ventilation (9) de la cuve d'oxydation.

4. Cuve d'oxydation (1) selon la revendication 2 ou 3, **caractérisée en ce que** les éléments perturbateurs de l'écoulement primaire (7) et les éléments perturbateurs supplémentaires (10) sont de forme sensiblement cylindrique, de préférence cylindrique ayant un rayon constant.

5. Cuve d'oxydation (1) selon l'une quelconque des revendications 1 à 4, **caractérisée en ce qu'**un élément d'admission d'eau de décharge (19) est situé en aval de chaque élément perturbateur de l'écoulement primaire (7), et **en ce que** l'écoulement secondaire (5) est fourni via les éléments d'admission d'eau de décharge (19).

6. Cuve d'oxydation (1) selon l'une quelconque des revendications 1 à 4, **caractérisée en ce que** l'élément perturbateur de l'écoulement primaire (7) est creux, et **en ce que** l'écoulement secondaire (5) est mélangé dans le flux primaire (7) au moyen des éléments perturbateurs de l'écoulement primaire creux (7) .

7. Cuve d'oxydation (1) selon la revendication 6, **caractérisée en ce que** la fourniture de l'écoulement secondaire (5) est effectuée au moyen d'au moins une rangée (16, 17) de buses d'élément perturbateur qui sont situées les unes au-dessus des autres et fournissent l'écoulement secondaire (5) dans un écoulement de traine turbulent (15) de l'écoulement primaire (4) après les éléments perturbateurs de l'écoulement primaire (7).

8. Cuve d'oxydation (1) selon la revendication 7, **caractérisée en ce que** chaque élément perturbateur de l'écoulement primaire (7) comprend deux rangées (16, 17) de buses (18) qui sont agencées selon un angle l'une par rapport à l'autre du côté de l'écoulement de sortie de l'élément perturbateur de l'écoulement primaire (7), et dans laquelle l'angle est de préférence 90°.

9. Cuve d'oxydation (1) selon l'une quelconque des revendications 2 à 4 et une quelconque des revendications 6 à 8, **caractérisée en ce que** l'élément perturbateur supplémentaire (10) est également creux, et **en ce qu'**une autre eau de décharge ou eau de mer supplémentaire est fournie via les éléments perturbateurs supplémentaires (10).

10. Procédé de traitement d'eau de décharge d'un dispositif d'épuration d'effluents gazeux à eau de mer destiné à éliminer le dioxyde de soufre des gaz d'échappement dans une cuve d'oxydation (1), en particulier d'un dispositif d'épuration d'effluents gazeux d'une centrale électrique, dans lequel une eau de décharge est mélangée avec de l'eau de mer supplémentaire aux fins de former un sulfate et de neutraliser, dans lequel l'eau de mer supplémentaire est dirigée en tant qu'écoulement primaire (4) via une admission (3) et l'eau de décharge est dirigée en tant qu'écoulement secondaire (5) via une admission supplémentaire dans la cuve d'oxydation (1), **caractérisé par** la fourniture de l'écoulement primaire (10) dans une chambre de distribution de la cuve d'oxydation (2) ayant une surface transversale d'admission et une surface transversale de sortie plus grande définie par la largeur de la cuve d'oxydation dans une direction sensiblement parallèle à une rangée d'éléments perturbateurs de l'écoulement primaire (7) situés dans la surface transversale de sortie de la chambre de distribution (2) et espacés sur la largeur (B) de la cuve d'oxydation ;
la redirection de l'écoulement primaire (4) dans la chambre de distribution (2) selon la direction longitudinale de la cuve d'oxydation ;
la décharge de l'échappement primaire (4) depuis la chambre de distribution (2) à travers des intervalles entre les éléments perturbateurs de l'écoulement primaire (7) ; et
la fourniture d'air d'oxydation dans le mélange d'eau de décharge et d'eau de mer supplémentaire via des éléments de ventilation (11) qui sont situés au fond d'une section de ventilation (9) de la cuve d'oxydation qui est ouverte au sommet, dans lequel la chambre de distribution (2) comprend une surface transversale initiale perpendiculaire à la direction d'admission de l'écoulement primaire du côté de l'admission (3), dans lequel la surface transversale de la chambre de distribution perpendiculaire à la direction d'écoulement d'admission de l'écoulement primaire décroît le long de la largeur de la cuve d'oxydation (1) et devient minimale d'un côté de la chambre de distribution opposé à l'admission (3).

11. Procédé selon la revendication 10, **caractérisé par** la fourniture de l'écoulement secondaire (5) dans l'écoulement primaire (4) via des buses situées dans les éléments perturbateurs de l'écoulement primaire (7) ou via des éléments d'admission d'eau de décharge (19) situés en aval des éléments perturbateurs de l'écoulement primaire (7), dans lequel l'écoulement secondaire (5) est fourni dans un écoulement de traine turbulent de l'écoulement primaire en aval des éléments perturbateurs de l'écoulement primaire (7).

12. Procédé selon la revendication 11, **caractérisé par** le mélange de l'écoulement primaire (4) et de l'écoulement secondaire (5) dans une chambre de mélange (6) de la cuve d'oxydation et la décharge de l'eau mélangée (8) ainsi formée via une rangée d'éléments perturbateurs supplémentaires (10) depuis la chambre de mélange (6) dans la section de ventilation (9) de la cuve d'oxydation.
